# EUROPEAN PATENT SPECIFICATION

(11) **EP 4 410 641 B1**
(45) Date of publication and mention of the grant of the patent: **04.03.2026**
(21) Application number: 22882532.9
(22) Date of filing: 19.09.2022
(51) Int. Cl.: B62D 35/00

(54) **ELECTRIC EMPENNAGE CONTROL METHOD AND APPARATUS, AND ELECTRONIC DEVICE AND VEHICLE**
VERFAHREN UND VORRICHTUNG ZUR STEUERUNG EINER ELEKTRISCHEN LEITUNG SOWIE ELEKTRONISCHE VORRICHTUNG UND FAHRZEUG
PROCÉDÉ ET APPAREIL DE COMMANDE D'EMPENNAGE ÉLECTRIQUE, ET DISPOSITIF ÉLECTRONIQUE ET VÉHICULE

(30) Priority: 19.10.2021 CN 202111217240
(43) Date of publication of application: 07.08.2024
(73) Proprietor: Great Wall Motor Company Limited, Baoding, Hebei 071000 (CN)
(72) Inventor: LIU, Wang, Baoding, Hebei 071000 (CN)
(74) Representative: Klunker IP Patentanwälte PartG mbB
(86) International application number: PCT/CN2022/119687
(87) International publication number: WO 2023/065921

(56) References cited:
- CN-A- 106 556 505
- CN-A- 108 945 117
- CN-A- 110 949 550
- CN-A- 110 949 550
- CN-A- 111 336 247
- CN-A- 114 954 698
- CN-A- 114 954 698
- CN-A- 115 946 786
- CN-A- 117 302 368
- CN-A- 117 698 858
- CN-A- 118 597 134
- DE-A1- 102018 123 481
- US-A- 4 674 788
- US-A1- 2008 272 729
- US-A1- 2012 259 517
- US-A1- 2017 088 194
- US-B1- 7 213 870
- US-B2- 10 618 573

## Description

### TECHNICAL FIELD

The present invention relates to the technical field of automobiles, in particular, to an electronic spoiler control method, an apparatus, an electronic device and a vehicle.

### BACKGROUND

With the improvement of human living standards, automobile products have become an important part of people's lives, and people's requirements for automobiles are also increasing. In the purchase of a vehicle, not only the comfort, power, maneuverability and economy of the vehicle should be considered, but also the appearance and functional configuration of the vehicle should be considered. The spoiler is installed at the rear of the vehicle, which not only plays a decorative role for the whole vehicle, but also improves the stability and economy of the vehicle, and increases the safety factor of the vehicle.

During use, the position of the spoiler is easy to shift. When the spoiler shifts, the angle of the spoiler cannot be corrected in time, which will affect the traveling of the vehicle.
US 2012/259517 A1 shows an aerodynamically effective device for a motor vehicle having an air guide element that can be moved between a position of rest and at least one operating position, a drive unit for moving the air guide element, and a control unit, wherein the control unit is adapted to instruct the drive unit to move the air guide element from the position of rest into the operating position, on reaching a first vehicle speed threshold value.

### SUMMARY

It is an object of the present invention to provide an electric spoiler control method, an electric spoiler control apparatus, a vehicle, and a computer program product, which are intended to solve the problem that an angle of the spoiler angle cannot be corrected in time when the spoiler is deviated.

The object is achieved with the features of independent claim 1 regarding the electric spoiler control method, of independent claim 8 regarding the electric spoiler control apparatus, of independent claim 9 regarding the vehicle, and of independent claim 10 regarding the computer program product.

In the electric spoiler control method, the apparatus, and the vehicle provided by the present invention, when the electric spoiler moves to a preset position during traveling of the vehicle, the current position of the spoiler is acquired in real time. When the position of the spoiler is detected to be deviated, that is, when the current position is different from the preset position, the spoiler is determined to be deviated, and then a deviation signal about the deviation of the spoiler is output to inquire whether to adjust the spoiler. When a confirmation adjustment signal for the deviation signal is detected, the spoiler is controlled to enter a self-learning state of the spoiler. The spoiler self-learning state includes controlling the spoiler to perform a preset learning action between a plurality of calibration positions to eliminate the deviation of the spoiler. When the deviation value between the actual position and a corresponding calibration position is detected to be less than a preset deviation value, the self-learning of the spoiler is determined to be successful, and the spoiler can continue to be controlled for subsequent movement, thereby solving the problem that the angle of the spoiler cannot be corrected in time when the spoiler is deviated, and effectively improving the applicability of the spoiler.

### BRIEF DESCRIPTION OF THE DRAWINGS

In order to more clearly illustrate the technical solutions of the present invention or the prior art, the figures that are required to describe the invention or the prior art are briefly introduced below.
FIG. 1 schematically shows a schematic flowchart of a control method according to an embodiment of the present invention;
Fig. 2 schematically shows a schematic flowchart for determining whether an spoiler is deviated according to an embodiment of the present invention;
Fig. 3 schematically shows a schematic flowchart for outputting a deviation signal according to an embodiment of the present invention;
Fig. 4 schematically shows a schematic flowchart for determining an operating condition before a self-learning state is entered according to an embodiment of the present invention;
Fig. 5 schematically shows a schematic flowchart for performing a preset learning action according to an embodiment of the present invention;
Fig. 6 schematically shows a schematic flowchart for determining that an spoiler self-learning is successful according to an embodiment of the present invention;
Fig. 7 schematically shows a schematic flowchart for determining that the spoiler self-learning is unsuccessful according to an embodiment of the present invention;
Fig. 8 schematically shows a schematic diagram of modules of an apparatus according to an embodiment of the present invention;

### DESPOILERED DESCRIPTION OF THE EMBODIMENTS

In order to make the objects, the technical solutions and the advantages of the present invention clearer, the present invention is clearly and completely described below with reference to the drawings of the present invention.

With the improvement of human living standards, automobile products have become an important part of people's lives, and people's requirements for automobiles are also increasing. In purchase of vehicles, the comfort, power, maneuverability and economy of the vehicle should be considered, but also the appearance and functional configuration of the vehicle should also be considered. The spoiler is installed at the rear of the vehicle, which not only plays a decorative role for the whole vehicle, but also can improve the stability and economy of the vehicle, increase the safety factor of the vehicle, attracts customers, give customers a more luxurious and sporty vehicle experience, and show a young and fashionable sports style which users pursue.

During the use of the spoiler, the influence of the spoiler on the airflow can improve the traveling performance of the vehicle. However, during the use of the spoiler, when the spoiler is deviated, the spoiler does not match the traveling state of the vehicle, and it is easy to affect the traveling state of the vehicle. However, when the spoiler is deviated, the driver often cannot correct the angle of the spoiler in time, which will influence the traveling of the vehicle.

### Embodiment one

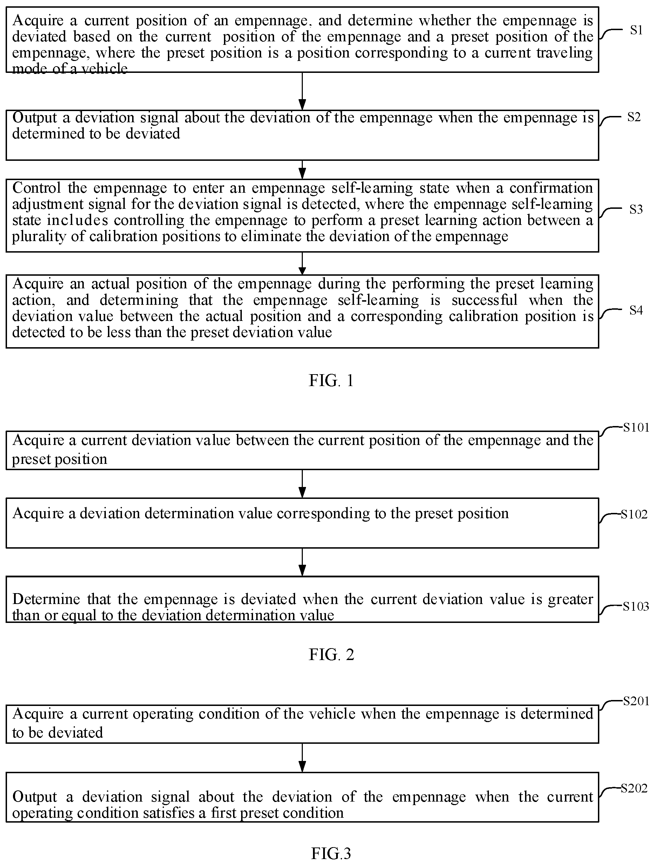

In view of this, a first aspect of the present invention provides an electric spoiler control method including S1-S4, as shown in FIG. 1.

In S1, a current position of the spoiler is acquired, and whether the spoiler is deviated is determined based on the current position and the preset position, where the preset position is a position corresponding to the current traveling mode of the vehicle.

During the traveling process of the vehicle, as the speed of the vehicle changes, the airflow state at the rear of the vehicle is different, and the influence on the vehicle is also different. Therefore, the position of the spoiler of the vehicle is determined based on the current traveling state of the vehicle, the preset scheme and algorithm, so that the influence of the airflow on the vehicle is reduced, and the traveling state of the vehicle is improved. That is, the current preset position of the spoiler is determined based on to the traveling state of the vehicle, and the motor of the spoiler is controlled to drive the spoiler to the preset position.

After the spoiler moves to the preset position, the position of the spoiler is acquired in real time by a detection module. In one embodiment, the current position of the spoiler can be detected by a Hall sensor, and compared with the preset position. When the deviation between the current position of the spoiler and the preset position, the spoiler is determined to be deviated and needs to be adjusted.

In S2, when the spoiler is determined to be deviated, a deviation signal about the deviation of the spoiler is output.

During the traveling process of the vehicle, in some cases, the change of the spoiler will have an influence on the traveling state of the vehicle. Therefore, the current operating condition of the vehicle are acquired first, including a current power-on condition of the vehicle, a current speed of the vehicle and a power supply condition of the spoiler, etc. When the current operating condition of the vehicle satisfies a preset condition, that is, when the current operating condition of the vehicle allows the vehicle to adjust the spoiler, a deviation signal about the deviation of the spoiler is output.

In one embodiment, when the vehicle receives the deviation signal, a driver is prompted through a multimedia display screen of the vehicle whether the spoiler needs to be adjusted, confirms through a button on the multimedia display screen whether to adjust the spoiler.

In S3, when a confirmation adjustment signal for the deviation signal is detected, the spoiler is controlled to enter an spoiler self-learning state, where the spoiler self-learning state includes controlling the spoiler to perform a preset learning action between a plurality of calibration positions to eliminate the deviation of the spoiler.

When the confirmation adjustment signal for the deviation signal is received, that is, the spoiler is determined to be adjusted, the spoiler is controlled to enter the spoiler self-learning state. When the spoiler enters the self-learning state, the spoiler is controlled to perform the preset learning action between a plurality of calibration positions. The mechanical engagement or mating state between driving devices of the spoiler is adjusted by performing the preset learning action to eliminate the deviation of the spoiler.

The calibration position can be an initial position of the spoiler. The motor of the spoiler drives the spoiler to start moving, and drives the spoiler to move to the pre-calibrated initial position, so that the position of the spoiler is reset to zero. When the spoiler moves again, it moves from the initial position, so that the deviation is corrected.

The calibration position can also be set by the driver based on the vehicle condition. In some embodiments, when the vehicle satisfies the preset condition, the driver can enter the calibration position setting mode through the multimedia display screen or a controller, such as a vehicle key, to control the spoiler to move to a certain position as the calibration position.

In some embodiments, when the spoiler is adjusted, the spoiler may be deviated due to jamming, so the jamming is eliminated by performing the preset action. In a specific embodiment, when the spoiler is adjusted, the spoiler is controlled to perform a lifting action and then return to the initial position. Foreign matter that may be present in the spoiler is cleared by controlling the spoiler to unfold and fold, so as to avoid jamming in the spoiler caused by the foreign matter.

In some embodiments, the adjustment action of the spoiler can be set by the driver based on the vehicle condition. When the vehicle satisfies the preset condition, the driver can enter the adjustment action setting mode through the multimedia display screen or the controller, such as the vehicle key, to control the movement of the spoiler through the multimedia display screen or the controller, and record the movement action of the spoiler as the adjustment action of the spoiler, such as controlling the spoiler to lift and lower reciprocally for several times, which effectively improves the applicability of the spoiler.

In S4, the actual position of the spoiler during the preset learning action is acquired, and when the deviation value between the actual position and the corresponding calibration position is detected to be less than the preset deviation value, the spoiler self-learning is determined to be successful.

After the motor drives the spoiler to move, the current position of the spoiler is detected again. When the deviation value between the actual position and the corresponding calibration position is detected to be less than the preset deviation value, the current actual position can be considered as an expected position, or the error is within the acceptable range, the spoiler self-learning is determined to be successful.

After the electric spoiler moves to the preset position during the traveling of the vehicle, the current position of the spoiler is acquired in real time. When the position of the spoiler is detected to be deviated, that is, when the current position is different from the preset position, the spoiler is determined to be deviated, and then the deviation signal about the deviation of the spoiler to inquire whether to adjust the spoiler is output. When the confirmation adjustment signal for the deviation signal is detected, the spoiler is controlled to enter the spoiler self-learning state. The spoiler self-learning state includes controlling the spoiler to perform the preset learning action between a plurality of calibration positions to eliminate the deviation of the spoiler. When the deviation value between the actual position and the corresponding calibration position is detected to be less than the preset deviation value, the spoiler self-learning is determined to be successful, and the spoiler can continue to be controlled for subsequent movement. The position of the spoiler is monitored in real time, the deviation value between the current position of the spoiler and the preset position is determined, whether the spoiler is deviated is determined in time, and the user is reminded in time to adjust when the spoiler is deviated, which solves the problem that the angle of the spoiler cannot be corrected in time, and effectively improves the applicability of the spoiler.

In some embodiments, as shown in FIG. 2, determining whether the spoiler is deviated based on the current position of the spoiler and the preset position of the spoiler includes S101-S103.

In S101, a current deviation value between the current position of the spoiler and the preset position is acquired.

During the operating process of the spoiler, the mechanical deviation between the transmission mechanisms during use will accumulate continuously over a long period of time of use, which can easily lead to an increase in the error of the spoiler. When the error reaches a certain value, it can easily affect the traveling of the vehicle. Therefore, the current deviation value between the current position of the spoiler and the preset position is acquired in real time to determine whether the current error of the spoiler is within the allowable range.

In S102, a deviation determination value corresponding to the preset position is acquired.

The deviation determination value is a deviation value that can easily affect the vehicle, and the deviation determination value can be adjusted based on the vehicle model or the spoiler model, etc.

In S103, when the current deviation value is greater than or equal to the deviation determination value, the spoiler is determined to be deviated.

If the current deviation value of the spoiler is greater than or equal to the offset determination value, it indicates that the deviation of the spoiler will affect the vehicle, and the spoiler is determined to be deviated and needs to be adjusted, so as to reduce or eliminate the deviation value, and reduce the influence of the deviation of the spoiler on the traveling of the vehicle.

In some embodiments, as shown in FIG. 3, outputting the deviation signal about the deviation of the spoiler offset when the spoiler is determined to be deviated, includes:
S201: acquiring the current operating condition of the vehicle when the spoiler is determined to be deviated; and
S202: outputting the deviation signal about the deviation of the spoiler when the current operating condition satisfies the first preset condition.

The first preset condition includes the power supply state of the spoiler being in a power-on state, the current vehicle speed not exceeding the first preset vehicle speed, and the tailgate of the vehicle being in a closed state.

When the motor, etc. of the spoiler is in the power-on state and the tailgate of the vehicle is in the closed state, it is determined that the motor can drive the spoiler to move. Since the higher the vehicle speed, the greater the influence of the spoiler on the vehicle, the current vehicle speed is detected. When the current vehicle speed does not exceed the first preset vehicle speed, the movement of the spoiler has less influence on the vehicle, thereby determining that the current vehicle condition allows the spoiler to be adjusted. For example, the first preset vehicle speed may be 5km/h, and when the vehicle speed is lower than 5km/h, the movement of the spoiler has less influence on the vehicle.

In other embodiments, the first preset vehicle speed can be a higher vehicle speed. When the speed is higher, a signal about the deviation of the spoiler is sent to the driver, and the driver is reminded that the vehicle speed is faster and it is necessary to slow down the speed to adjust the spoiler, so as to improve the applicability of the whole method.

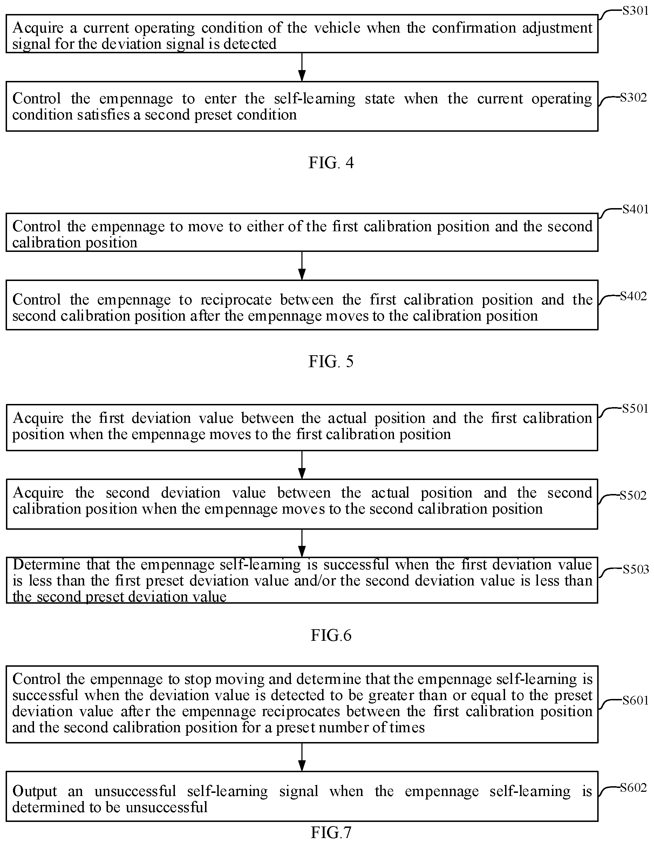

In some embodiments, as shown in FIG. 4, controlling the spoiler to enter the spoiler self-learning state when the confirmation adjustment signal for the deviation signal is detected, includes S301-S302.

In S301, the current operating condition of the vehicle is acquired when the confirmation adjustment signal for the deviation signal is detected.

When the vehicle receives the deviation signal that the spoiler is deviated, the driver needs to determine whether to adjust the spoiler and change the traveling state of the vehicle based on the deviation signal, or the vehicle condition changes. Therefore, when the confirmation adjustment signal for the deviation signal is detected, the current operating condition is acquired again to determine whether the spoiler can be adjusted.

In S302, when the current operating condition satisfies the second preset condition, the spoiler is controlled to enter the self-learning state, where the second preset condition includes the power state of the spoiler being in the power-on state, the current vehicle speed of the vehicle not exceeding the second preset vehicle speed , and the tailgate of the vehicle being in the closed state.

When the motor, etc. of the spoiler is in the power-on state and the tailgate of the vehicle is in the closed state, it is determined that the motor can drive the spoiler to move, that is, the spoiler can be adjusted only when the motor, etc. of the spoiler is in the power-on state and the tailgate of the vehicle is in the closed state. Therefore, the power state of the spoiler and the state of the tailgate of the vehicle are detected to determine whether the spoiler can be controlled. In addition, since the higher the vehicle speed, the greater the influence of the spoiler on the vehicle, the current vehicle speed is detected. When the current vehicle speed does not exceed the second preset vehicle speed, the movement of the spoiler has less influence on the vehicle, thereby determining that the current vehicle condition allows the spoiler to be adjusted. For example, the second preset vehicle speed may be 5km/h, and when the vehicle speed is lower than 5km/h, the movement of the spoiler has less impact on the vehicle.

In other embodiments, the second preset vehicle speed can be a higher vehicle speed. When the vehicle speed is higher, a signal about the deviation of the spoiler is sent to the driver, and the driver is reminded that the vehicle speed is faster, and the spoiler is adjusted after deceleration. When the vehicle condition is detected again, and the current operating condition satisfies the second preset condition, that is, the current vehicle condition allows the vehicle to adjust the spoiler, the spoiler is controlled to return to the calibration position. Confirming the vehicle condition for the second time can effectively avoid the influence of adjusting the spoiler on the vehicle caused by the change in the vehicle condition.

In some embodiments, as shown in FIG. 5, the plurality of calibration positions include at least a first calibration position and a second calibration position. Controlling the spoiler to perform the preset learning action between the plurality of calibration positions includes S401-S402.

In S401, the spoiler is controlled to move to any one of the first calibration position and the second calibration position.

When it is determined that the spoiler performs a preset learning action, the spoiler is first controlled to move to either of the first calibration position and the second calibration position as a starting point of the movement, so as to determine the current deviation value of the spoiler and determine the orientation of the current position of the spoiler with respect to the calibration position, so that the movement rule is determined, and the preset learning action is performed from the calibration position.

In S402, when the spoiler moves to either calibration position, the spoiler is controlled to reciprocate between the first calibration position and the second calibration position.

The first calibration position and the second calibration position can be the starting position and the maximum opening position, and can also be any two different positions that can be calibrated by themselves. After the starting point of the movement is determined, the reciprocating movement is controlled to adjust the mechanical engagement or matching state between the driving apparatuses of the spoiler to eliminate the deviation of the spoiler.

In some embodiments, as shown in FIG. 6, the preset deviation value includes a first preset deviation value corresponding to the first calibration position and a second preset deviation value corresponding to the second calibration position. Determining that the spoiler self-learning is successful when the deviation value between the actual position and the corresponding calibration position is detected to be less than the preset deviation value, includes:
S501: acquiring a first deviation value between the actual position and the first calibration position when the spoiler moves to the first calibration position;
S502: acquiring a second deviation value between the actual position and the second calibration position when the spoiler moves to the second calibration position; and
S503: determining that the spoiler self-learning is successful when the first deviation value is less than the first preset deviation value and/or the second deviation value is less than the second preset deviation value.

Since there is a certain error when the spoiler moves, the deviation value between the spoiler and the calibration position is detected when the spoiler movement is finished. When the deviation is less than the preset deviation value, it can be considered that the spoiler has successfully moved to the calibration position, e.g., the preset deviation value can be 2mm.

During the preset learning action, the error can be eliminated whether the spoiler moves at the first calibration position or the second calibration position. Therefore, the deviation values of two positions are acquired in real time to determine in time whether the self-leaning at the two positions is successful. When the spoiler self-learning at either calibration position is determined to be successful, the spoiler is controlled to stop, which effectively reduces the time for the self-learning action and improves the accuracy of the method.

In some embodiments, as shown in FIG. 7, the control method further includes S601 and S602.

In S601, When the deviation value is detected to be greater than or equal to the preset deviation value after the spoiler reciprocates between the first calibration position and the second calibration position for a preset number of times, the spoiler is controlled to stop moving, and the spoiler self-learning is determined to be unsuccessful.

When the deviation value is detected to be greater than or equal to the preset deviation value, it can be considered that the current deviation of the spoiler cannot be eliminated by performing the preset learning action, so the spoiler is controlled to stop moving to avoid damaging the spoiler, and the spoiler self-learning is determined to be unsuccessful.

In S602, when the spoiler self-learning is determined to be unsuccessful, a signal that the spoiler self-learning is unsuccessful is output.

When the spoiler is adjusted successfully, a signal that the spoiler is adjusted successfully is output through the multimedia display screen or the controller, e.g., the multimedia display screen displays that the adjustment is successful, or the controller emits a flashing light or a sound prompt to notify the driver that the adjustment is successful.

When the spoiler is adjusted unsuccessfully, a signal that the spoiler is adjusted unsuccessfully through the multimedia display screen or the controller, e.g., the multimedia display screen displays that the adjustment is unsuccessful, so that the driver can repair it in time.

In some embodiments, the control method further includes:
acquiring a current traveling mode of the vehicle;
acquiring a current power-on state of the vehicle and a vehicle speed, and determining a current traveling state of the vehicle, such as a starting state, a high-speed moving state, or a stalled state; and
determining a preset position corresponding to the spoiler based on the traveling mode, and outputting a control signal about the preset position.

Different vehicle states correspond to different positions of the spoiler. The preset position of the spoiler is determined by determining the vehicle state, and a control signal containing the preset position information is output to the spoiler.

When the control signal of the spoiler is detected, the motor is controlled to drive the spoiler to move to the preset position corresponding to the control signal.

In some embodiments, determining the first preset position corresponding to the spoiler based on the traveling mode includes:
determining the preset position as the position corresponding to a fully open state of the spoiler when the vehicle is detected to start,
controlling the spoiler to open to the fully open state, so that the spoiler enters the welcome mode when the vehicle starts, which effectively improves the sense of traveling ceremony;
determining the preset position as an initial position when the vehicle is detected to be stall;
controlling the spoiler to automatically fold when the vehicle is detected to stall, which avoids affecting the opening of the trunk, and entry of debris between the spoiler and the vehicle, so as to protect the spoiler; and
determining the preset position as the position corresponding to the highest current vehicle speed determined based on the preset solution when the vehicle is detected to travel at a high speed.

Based on the model of the vehicle, etc., the position of the spoiler position with the best effect on improving the traveling state of the vehicle at different vehicle speeds is determined by pre-testing. When the vehicle travels at a certain vehicle speed, the spoiler is controlled to move to the position which has the best effect on improving the traveling state of the vehicle at the current vehicle speed, so as. to effectively improve the performance of the vehicle. In some embodiments, when the vehicle speed decreases, the position of the spoiler is maintained to avoid the effect on the vehicle when the position of the spoiler changes.

In some specific embodiments, it is also possible to manually control the spoiler to fold, e.g., a fold command is output by the multimedia display screen or the controller, so as to control the spoiler to fold.

In some embodiments, the control method further includes:

The state of the tailgate is detected when the spoiler is moving or adjusted. When the tailgate is in the open state, the movement of the spoiler is limited to avoid damage to the spoiler or the vehicle.

### Embodiment two

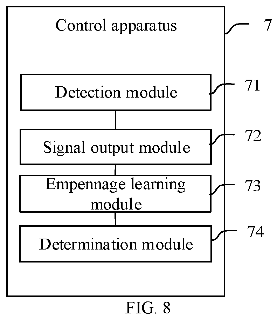

Based on the same inventive concept, as shown in FIG. 8, another embodiment of the present invention provides an electric spoiler control apparatus, and the control apparatus 7 includes a detection module 71, a signal output module 72, an spoiler learning module 73 and a determination module 74.

The detection module 71 is configured for acquiring a current position of the spoiler and determining whether the spoiler is deviated based on the current position of the spoiler and a preset position of the spoiler. The preset position is a position corresponding to a current traveling mode of the vehicle. The detection module 71 includes an spoiler controller for determining whether the spoiler is deviated and a Hall sensor arranged on the spoiler controller and configured to detect the current position of the spoiler.

The signal output module 72 is configured for outputting a deviation signal about deviation of the spoiler when the spoiler is determined to be deviated.

The signal output module 72 includes a Channel Element Module (CEM) for outputting a deviation signal about the deviation of the spoiler.

The spoiler learning module 73 is configured for controlling the spoiler to enter an spoiler self-learning state when a confirmation adjustment signal for the deviation signal is detected. The spoiler self-learning state includes controlling the spoiler to perform a preset learning action between a plurality of calibration positions to eliminate the deviation of the spoiler.

The spoiler learning module 73 includes a multimedia host. When the multimedia host detects the deviation signal about the deviation of the spoiler which the CEM outputs, it outputs the deviation signal through the multimedia screen, so that the driver selects whether to adjust the spoiler for the deviation signal. When adjusting the spoiler is selected, a confirmation adjustment signal for the deviation signal is output, and the spoiler adjustment signal is sent to the CEM, so that the spoiler controller is controlled by the CEM to adjust the spoiler, and the spoiler is controlled to return to the calibration position.

The determination module 74 is configured for acquiring an actual position in real time when the spoiler is detected to move to each of the calibration positions, and determining that the spoiler self-learning is successful when the deviation value between the actual position and the corresponding calibration position is detected to be less than the preset deviation value.

When the determination module 74 detects that the spoiler moves to the calibration position, it sends a signal about the completion of the spoiler adjustment to the CEM, so as to determine that the spoiler adjustment is completed.

In some embodiments, the detection module 71 is further configured for:
acquiring a current deviation value between the current position of the spoiler and the preset position;
acquiring a deviation determination value corresponding to the preset position; and
determining that the spoiler is deviated when the current deviation value is greater than or equal to the offset determination value.

In some embodiments, the detection module 71 is further configured for:
acquiring a current operating condition of the vehicle when the spoiler is determined to be deviated;
outputting a deviation signal about the deviation of the spoiler when the current operating condition satisfies a first preset condition,
where the first preset condition includes a power state of the spoiler being in a power-on state, a current vehicle speed not exceeding the first preset vehicle speed, and a tailgate of the vehicle being in a closed state.

In some embodiments, the spoiler learning module 73 is further configured for:
acquiring the current operating condition of the vehicle when the confirmation adjustment signal for the deviation signal is detected;
controlling the spoiler to enter the self-learning state when the current operating condition satisfies a second preset condition,
where the second preset condition includes the power state of the spoiler being in the power-on state, the current vehicle speed not exceeding the second preset vehicle speed, and the tailgate of the vehicle being in a closed state.

In some embodiments, the determining module 74 is further configured for:
controlling the spoiler to move to either of the first calibration position and the second calibration position;
controlling the spoiler to reciprocate between the first calibration position and the second calibration position after the spoiler moves to either calibration position.

In some embodiments, the determining module 74 is further configured for:
acquiring a first deviation value between the actual position and the first calibration position when the spoiler moves to the first calibration position;
acquiring a second deviation value between the actual position and the second calibration position when the spoiler moves to the second calibration position; and
determining that the spoiler self-learning is successful when the first deviation value is less than the first preset deviation value and/or the second deviation value is less than the second preset deviation value.

In some embodiments, the control apparatus further includes:
a prompting module 75 for controlling the spoiler to stop moving and determining that the spoiler self-learning is unsuccessful when the deviation value is detected to be greater than or equal to the preset deviation value after the spoiler reciprocates between the first calibration position and the second calibration position for a preset number of times; and
outputting a signal that the spoiler self-learning is unsuccessful when the spoiler self-learning is determined to be unsuccessful.

### Embodiment three

Based on the same inventive concept, another embodiment of the present invention provides a vehicle including a control apparatus, and the control apparatus is configured to implement the above control method.

### Embodiment four

Based on the same inventive concept, another embodiment of the present invention provides a computer program product including a computer program/instruction, and when the computer program/instruction is executed by a processor to implement the above control method.

The apparatus embodiment is basically similar to the method embodiment, and the description is relatively simple. For relevant parts, please refer to part of the description of the method embodiment.

Each embodiment in this specification is described in a progressive manner, each embodiment focuses on the difference from other embodiments, and the same and similar parts of each embodiment can be referred to each other.

It should be appreciated by those skilled in the art that the embodiments of the present application may be provided as methods, apparatuses or computer program products. Accordingly, the embodiments of the present application can take the form of an entirely hardware embodiment, an entirely software embodiment, or a combination embodiment of software and hardware. Moreover, the embodiments of the present invention may take the form of a computer program product embodied on one or more computer usable storage media (including but not limited to disk storage, CD-ROM, optical storage, etc.) in which computer usable program codes are included.

The embodiments of the present application are described with reference to the flow charts and/or block diagrams of the method, terminal device (system), and computer program products according to the embodiments of the present application. It should be appreciated that each flow and/or block in the flow charts and/or block diagrams, and combinations of the flows and/or blocks in the flow charts and/or block diagrams can be implemented by computer program instructions. These computer program instructions may be provided to a general purpose computer, a special purpose computer, an embedded processor, or a processor of other programmable data processing terminal device to produce a machine for the instructions executed by the computer or the processor of other programmable data processing terminal device to generate an apparatus for implementing the functions specified in one or more flows of the flow chart and/or in one or more blocks of the block diagram.

These computer program instructions may also be provided to a computer-readable memory that can guide the computer or other programmable data processing terminal device to work in a given manner, so that the instructions stored in the computer-readable memory generate a product including an instruction apparatus that implements the functions specified in one or more flows of the flow chart and/or in one or more blocks of the block diagram.

These computer program instructions may also be loaded to a computer, or other programmable terminal device, so that a series of operating steps are executed on the computer, or other programmable terminal device to produce processing implemented by the computer, so that the instructions executed in the computer or other programmable terminal device provide steps for implementing the functions specified in one or more flows of the flow chart and/or in one or more blocks of the block diagram.

Finally, it should also be noted that relational terms herein such as first and second, etc., are used merely to distinguish one entity or operation from another entity or operation, and do not necessarily require or imply there is any such relationship or order between these entities or operations. Furthermore, the terms "including", "comprising" or any variations thereof are intended to embrace a non-exclusive inclusion, such that a process, method, article, or terminal device including a plurality of elements includes not only those elements but also includes other elements not expressly listed, or also includes elements inherent to such a process, method, article, or device. In the absence of further limitation, an element defined by the phrase "including a ..." does not exclude the presence of additional identical element in the process, method, article, or terminal device.

## Claims

1. An electric spoiler control method, comprising:
(S1) acquiring a current position of an spoiler, and determining whether the spoiler is deviated based on the current position of the spoiler and a preset position of the spoiler, wherein the preset position is a position corresponding to a current traveling mode of a vehicle;
(S2) outputting a deviation signal about the deviation of the spoiler when the spoiler is determined to be deviated;
**characterized by**
(S3) controlling the spoiler to enter an spoiler self-learning state when a confirmation adjustment signal for the deviation signal is detected, wherein the spoiler self-learning state comprises controlling the spoiler to perform a preset learning action between a plurality of calibration positions to eliminate the deviation of the spoiler; and
(S4) acquiring an actual position of the spoiler during the performing the preset learning action, and determining that the spoiler self-learning is successful when the deviation value between the actual position and a corresponding calibration position is detected to be less than the preset deviation value.

2. The according to claim 1, wherein the determining whether the spoiler is deviated based on the current t position of the spoiler and a preset position of the spoiler comprises:
(S101) acquiring a current deviation value between the current position of the spoiler and the preset position;
(S102) acquiring a deviation determination value corresponding to the preset position; and
(S103) determining that the spoiler is deviated when the current deviation value is greater than or equal to the deviation determination value.

3. The method according to claim 1, wherein the outputting the deviation signal about the deviation of the spoiler when the spoiler is determined to be deviated comprises:
(S201) acquiring a current operating condition of the vehicle when the spoiler is determined to be deviated; and
(S202) outputting a deviation signal about the deviation of the spoiler when the current operating condition satisfies a first preset condition,
wherein the first preset condition comprises a power state of the spoiler being in a power-on state, a current vehicle speed not exceeding a first preset vehicle speed, and a tailgate of the vehicle being in a closed state.

4. The method according to claim 1, wherein the controlling the spoiler to enter an spoiler self-learning state when a confirmation adjustment signal for the deviation signal is detected comprises:
(S301) acquiring a current operating condition of the vehicle when the confirmation adjustment signal for the deviation signal is detected; and
(S302) controlling the spoiler to enter the self-learning state when the current operating condition satisfies a second preset condition,
wherein the second preset condition comprises a power state of the spoiler being in a power-on state, a current vehicle speed not exceeding a second preset vehicle speed, and a tailgate of the vehicle being in a closed state.

5. The method according to claim 1, wherein the plurality of calibration positions comprise at least a first calibration position and a second calibration position, and the controlling the spoiler to perform the preset learning action between the plurality of calibration positions comprises:
(S401) controlling the spoiler to move to either of the first calibration position and the second calibration position; and
(S402) controlling the spoiler to reciprocate between the first calibration position and the second calibration position after the spoiler moves to the calibration position.

6. The method according to claim 5, wherein the preset deviation value comprises a first preset deviation value corresponding to the first calibration position and a second preset deviation value corresponding to the second calibration position, and the determining that the spoiler self-learning is successful when the deviation value between the actual position and the corresponding calibration position is detected to be less than the preset deviation value comprises:
(S501) acquiring the first deviation value between the actual position and the first calibration position when the spoiler moves to the first calibration position;
(S502) acquiring the second deviation value between the actual position and the second calibration position when the spoiler moves to the second calibration position; and
(S503) determining that the spoiler self-learning is successful when the first deviation value is less than the first preset deviation value and/or the second deviation value is less than the second preset deviation value.

7. The control method according to claim 5, wherein the control method further comprises:
(S601) controlling the spoiler to stop moving and determining that the spoiler self-learning is successful when the deviation value is detected to be greater than or equal to the preset deviation value after the spoiler reciprocates between the first calibration position and the second calibration position for a preset number of times; and
(S602) outputting an unsuccessful self-learning signal when the spoiler self-learning is determined to be unsuccessful.

8. An electric spoiler control apparatus (7), comprising:
a detection module (71) for acquiring a current position of a spoiler, and determining whether the spoiler is deviated based on the current position of the spoiler and a preset position of the spoiler, wherein the preset position is a position corresponding to a current traveling mode of the vehicle;
a signal output module (72) for outputting a deviation signal about deviation of the spoiler when the spoiler is determined to be deviated;
an spoiler learning module (73) for controlling the spoiler to enter an spoiler self-learning state when a confirmation adjustment signal for the deviation signal is detected, wherein the spoiler self-learning state comprises controlling the spoiler to perform a preset learning action between a plurality of calibration positions to eliminate the deviation of the spoiler; and
a determination module (74) for acquiring an actual position of the spoiler in real time when the spoiler moves to each of the calibration positions, and determining that the spoiler self-learning is successful when the deviation value between the actual position and a corresponding calibration position is detected to be less than the preset deviation value.

9. A vehicle, comprising a control apparatus for implementing the method according to any one of claims 1-7.

10. A computer program product, comprising a computer program, wherein the computer program, when executed by a processor, implements the method according to any one of claims 1-7.

## Patentansprüche

1. Elektrisches Spoiler-Steuerverfahren, aufweisend:
(S1) Erfassen einer aktuellen Position eines Spoilers und Bestimmen, ob der Spoiler abweicht, basierend auf der aktuellen Position des Spoilers und einer vorgegebenen Position des Spoilers, wobei die vorgegebene Position eine Position ist, die einem aktuellen Fahrmodus eines Fahrzeugs entspricht;
(S2) Ausgeben eines Abweichungssignals bezüglich einer Abweichung des Spoilers, wenn bestimmt wird, dass der Spoiler abweicht;
**dadurch gekennzeichnet, dass**
(S3) der Spoiler gesteuert wird, in einen Spoiler-Selbstlernzustand überzugehen, wenn ein Bestätigungseinstellsignal für das Abweichungssignal erfasst wird, wobei der Spoiler-Selbstlernzustand das Steuern des Spoilers aufweist, eine vorgegebene Lernbewegung zwischen einer Mehrzahl von Kalibrierpositionen auszuführen, um die Abweichung des Spoilers zu beseitigen; und
(S4) während des Ausführens der vorgegebenen Lernbewegung eine tatsächliche Position des Spoilers erfasst wird und bestimmt wird, dass das Spoiler-Selbstlernen erfolgreich ist, wenn erkannt wird, dass ein Abweichungswert zwischen der tatsächlichen Position und einer entsprechenden Kalibrierposition kleiner als ein vorgegebener Abweichungswert ist.

2. Verfahren nach Anspruch 1, wobei das Bestimmen, ob der Spoiler basierend auf der aktuellen Position des Spoilers und einer vorgegebenen Position des Spoilers abweicht, aufweist:
(S101) Erfassen eines aktuellen Abweichungswertes zwischen der aktuellen Position des Spoilers und der vorgegebenen Position;
(S102) Erfassen eines Abweichungsbestimmungswertes, der der vorgegebenen Position entspricht; und
(S103) Bestimmen, dass der Spoiler abweicht, wenn der aktuelle Abweichungswert größer als oder gleich dem Abweichungsbestimmungswert ist.

3. Verfahren nach Anspruch 1, wobei das Ausgeben des Abweichungssignals bezüglich der Abweichung des Spoilers, wenn bestimmt wird, dass der Spoiler abweicht, aufweist:
(S201) Erfassen eines aktuellen Betriebszustands des Fahrzeugs, wenn bestimmt wird, dass der Spoiler abweicht; und
(S202) Ausgeben eines Abweichungssignals bezüglich der Abweichung des Spoilers, wenn der aktuelle Betriebszustand eine erste vorgegebene Bedingung erfüllt,
wobei die erste vorgegebene Bedingung aufweist, dass ein Versorgungszustand des Spoilers in einem eingeschalteten Zustand ist, eine aktuelle Fahrzeuggeschwindigkeit eine erste vorgegebene Fahrzeuggeschwindigkeit nicht überschreitet und eine Heckklappe des Fahrzeugs in einem geschlossenen Zustand ist.

4. Verfahren nach Anspruch 1, wobei das Steuern des Spoilers, in einen Spoiler-Selbstlernzustand überzugehen, wenn ein Bestätigungseinstellsignal für das Abweichungssignal erfasst wird, Folgendes aufweist:
(S301) Erfassen eines aktuellen Betriebszustands des Fahrzeugs, wenn das Bestätigungs-Einstellsignal für das Abweichungssignal erfasst wird; und
(S302) Steuern des Spoilers, in den Selbstlernzustand überzugehen, wenn der aktuelle Betriebszustand eine zweite vorgegebene Bedingung erfüllt,
wobei die zweite vorgegebene Bedingung aufweist, dass ein Versorgungszustand des Spoilers in einem eingeschalteten Zustand ist, eine aktuelle Fahrzeuggeschwindigkeit eine zweite vorgegebene Fahrzeuggeschwindigkeit nicht überschreitet und eine Heckklappe des Fahrzeugs in einem geschlossenen Zustand ist.

5. Verfahren nach Anspruch 1, wobei die Mehrzahl von Kalibrierpositionen zumindest eine erste Kalibrierposition und eine zweite Kalibrierposition aufweist und wobei das Steuern des Spoilers zum Ausführen der vorgegebenen Lernbewegung zwischen der Mehrzahl von Kalibrierpositionen aufweist:
(S401) Steuern des Spoilers, sich zu einer von der ersten Kalibrierposition und der zweiten Kalibrierposition zu bewegen; und
(S402) Steuern des Spoilers, nachdem sich der Spoiler zu der Kalibrierposition bewegt hat, zwischen der ersten Kalibrierposition und der zweiten Kalibrierposition hin- und herzubewegen.

6. Verfahren nach Anspruch 5, wobei der vorgegebene Abweichungswert einen ersten vorgegebenen Abweichungswert, der der ersten Kalibrierposition entspricht, und einen zweiten vorgegebenen Abweichungswert, der der zweiten Kalibrierposition entspricht, aufweist und wobei das Bestimmen, dass das Spoiler-Selbstlernen erfolgreich ist, wenn erkannt wird, dass der Abweichungswert zwischen der tatsächlichen Position und der entsprechenden Kalibrierposition kleiner als der vorgegebene Abweichungswert ist, aufweist:
(S501) Erfassen eines ersten Abweichungswertes zwischen der tatsächlichen Position und der ersten Kalibrierposition, wenn sich der Spoiler zur ersten Kalibrierposition bewegt;
(S502) Erfassen eines zweiten Abweichungswertes zwischen der tatsächlichen Position und der zweiten Kalibrierposition, wenn sich der Spoiler zur zweiten Kalibrierposition bewegt; und
(S503) Bestimmen, dass das Spoiler-Selbstlernen erfolgreich ist, wenn der erste Abweichungswert kleiner als der erste vorgegebene Abweichungswert ist und/oder der zweite Abweichungswert kleiner als der zweite vorgegebene Abweichungswert ist.

7. Verfahren nach Anspruch 5, wobei das Steuerverfahren ferner aufweist:
(S601) Steuern des Spoilers zum Anhalten der Bewegung und Bestimmen, dass das Spoiler-Selbstlernen erfolgreich ist, wenn erkannt wird, dass der Abweichungswert größer als oder gleich dem vorgegebenen Abweichungswert ist, nachdem sich der Spoiler für eine vorgegebene Anzahl von Malen zwischen der ersten Kalibrierposition und der zweiten Kalibrierposition hin- und herbewegt hat; und
(S602) Ausgeben eines erfolglosen Selbstlernsignals, wenn bestimmt wird, dass das Spoiler-Selbstlernen nicht erfolgreich ist.

8. Elektrische Spoiler-Steuervorrichtung (7), aufweisend:
ein zum Erfassen einer aktuellen Position eines Spoilers und zum Bestimmen, ob der Spoiler basierend auf der aktuellen Position des Spoilers und einer vorgegebenen Position des Spoilers abweicht, ausgebildetes Erfassungsmodul (71), wobei die vorgegebene Position eine Position ist, die einem aktuellen Fahrmodus des Fahrzeugs entspricht;
ein zum Ausgeben eines Abweichungssignals bezüglich einer Abweichung des Spoilers, wenn bestimmt wird, dass der Spoiler abweicht, ausgebildetes Signalausgabemodul (72);
ein zum Steuern des Spoilers zum Übergehen in einen Spoiler-Selbstlernzustand, wenn ein Bestätigungs-Einstellsignal für das Abweichungssignal erfasst wird, ausgebildetes Spoiler-Lernmodul (73), wobei der Spoiler-Selbstlernzustand das Steuern des Spoilers aufweist, eine vorgegebene Lernbewegung zwischen einer Mehrzahl von Kalibrierpositionen auszuführen, um die Abweichung des Spoilers zu beseitigen; und
ein zum Erfassen einer tatsächlichen Position des Spoilers in Echtzeit, wenn sich der Spoiler zu jeder der Kalibrierpositionen bewegt, und zum Bestimmen, dass das Spoiler-Selbstlernen erfolgreich ist, wenn erkannt wird, dass ein Abweichungswert zwischen der tatsächlichen Position und einer entsprechenden Kalibrierposition kleiner als ein vorgegebener Abweichungswert ist, ausgebildetes Bestimmungsmodul (74).

9. Fahrzeug, aufweisend eine Steuervorrichtung zur Durchführung des Verfahrens nach einem der Ansprüche 1 bis 7.

10. Computerprogrammprodukt, aufweisend ein Computerprogramm, wobei das Computerprogramm, wenn es von einem Prozessor ausgeführt wird, das Verfahren nach einem der Ansprüche 1 bis 7 implementiert.

## Revendications

1. Procédé de commande de spoiler électrique, comprenant :
(S1) l'acquisition d'une position courante d'un spoiler et la détermination de si le spoiler est ou non dévié sur la base de la position courante du spoiler et d'une position prédéfinie du spoiler, dans lequel la position prédéfinie est une position qui correspond à un mode de déplacement courant d'un véhicule ; et
(S2) l'émission en sortie d'un signal de déviation relatif à la déviation du spoiler lorsque le spoiler est déterminé comme étant dévié ;
**caractérisé par** :
(S3) la commande du spoiler pour qu'il entre dans un état d'auto-apprentissage de spoiler lorsqu'un signal de confirmation de réglage pour le signal de déviation est détecté, dans lequel l'état d'auto-apprentissage de spoiler comprend la commande du spoiler pour qu'il réalise une action d'apprentissage prédéfinie entre une pluralité de positions d'étalonnage afin d'éliminer la déviation du spoiler ; et
(S4) l'acquisition d'une position réelle du spoiler pendant la réalisation de l'action d'apprentissage prédéfinie et la détermination du fait que l'auto-apprentissage de spoiler a été effectué avec succès lorsque la valeur de déviation entre la position réelle et une position d'étalonnage correspondante est détectée comme étant inférieure à la valeur de déviation prédéfinie.

2. Procédé selon la revendication 1, dans lequel la détermination de si le spoiler est ou non dévié sur la base de la position courante du spoiler et d'une position prédéfinie du spoiler comprend :
(S101) l'acquisition d'une valeur de déviation courante entre la position courante du spoiler et la position prédéfinie ;
(S102) l'acquisition d'une valeur de détermination de déviation qui correspond à la position prédéfinie ; et
(S103) la détermination du fait que le spoiler est dévié lorsque la valeur de déviation courante est supérieure ou égale à la valeur de détermination de déviation.

3. Procédé selon la revendication 1, dans lequel l'émission en sortie du signal de déviation relatif à la déviation du spoiler lorsque le spoiler est déterminé comme étant dévié comprend :
(S201) l'acquisition d'une condition de fonctionnement courante du véhicule lorsque le spoiler est déterminé comme étant dévié ; et
(S202) l'émission en sortie d'un signal de déviation relatif à la déviation du spoiler lorsque la condition de fonctionnement courante satisfait une première condition prédéfinie,
dans lequel la première condition prédéfinie comprend le fait qu'un état d'alimentation du spoiler est un état alimenté, le fait qu'une vitesse de véhicule courante n'excède pas une première vitesse de véhicule prédéfinie et le fait qu'un hayon du véhicule est dans un état fermé.

4. Procédé selon la revendication 1, dans lequel la commande du spoiler pour qu'il entre dans un état d'auto-apprentissage de spoiler lorsqu'un signal de confirmation de réglage pour le signal de déviation est détecté comprend :
(S301) l'acquisition d'une condition de fonctionnement courante du véhicule lorsque le signal de confirmation de réglage pour le signal de déviation est détecté ; et
(S302) la commande du spoiler pour qu'il entre dans l'état d'auto-apprentissage lorsque la condition de fonctionnement courante satisfait une seconde condition prédéfinie,
dans lequel la seconde condition prédéfinie comprend le fait qu'un état d'alimentation du spoiler est un état alimenté, le fait qu'une vitesse de véhicule courante n'excède pas une seconde vitesse de véhicule prédéfinie et le fait qu'un hayon du véhicule est dans un état fermé.

5. Procédé selon la revendication 1, dans lequel la pluralité de positions d'étalonnage comprend au moins une première position d'étalonnage et une seconde position d'étalonnage, et la commande du spoiler pour qu'il réalise l'action d'apprentissage prédéfinie entre la pluralité de positions d'étalonnage comprend :
(S401) la commande du spoiler pour qu'il soit déplacé soit dans la première position d'étalonnage, soit dans la seconde position d'étalonnage ; et
(S402) la commande du spoiler pour qu'il effectue un va-et-vient entre la première position d'étalonnage et la seconde position d'étalonnage après que le spoiler a été déplacé dans la position d'étalonnage.

6. Procédé selon la revendication 5, dans lequel la valeur de déviation prédéfinie comprend une première valeur de déviation prédéfinie qui correspond à la première position d'étalonnage et une seconde valeur de déviation prédéfinie qui correspond à la seconde position d'étalonnage, et la détermination du fait que l'auto-apprentissage de spoiler a été effectué avec succès lorsque la valeur de déviation entre la position réelle et la position d'étalonnage correspondante est détectée comme étant inférieure à la valeur de déviation prédéfinie comprend :
(S501) l'acquisition de la première valeur de déviation entre la position réelle et la première position d'étalonnage lorsque le spoiler est déplacé dans la première position d'étalonnage ;
(S502) l'acquisition de la seconde valeur de déviation entre la position réelle et la seconde position d'étalonnage lorsque le spoiler est déplacé dans la seconde position d'étalonnage ; et
(S503) la détermination du fait que l'auto-apprentissage de spoiler a été effectué avec succès lorsque la première valeur de déviation est inférieure à la première valeur de déviation prédéfinie et/ou que la seconde valeur de déviation est inférieure à la seconde valeur de déviation prédéfinie.

7. Procédé de commande selon la revendication 5, dans lequel le procédé de commande comprend en outre :
(S601) la commande du spoiler pour qu'il arrête de se déplacer et la détermination du fait que l'auto-apprentissage de spoiler a été effectué avec succès lorsque la valeur de déviation est détectée comme étant supérieure ou égale à la valeur de déviation prédéfinie après que le spoiler a effectué un va-et-vient entre la première position d'étalonnage et la seconde position d'étalonnage un nombre de fois prédéfini ; et
(S602) l'émission en sortie d'un signal d'auto-apprentissage sans succès lorsque l'auto-apprentissage de spoiler est déterminé comme n'ayant pas été effectué avec succès.

8. Appareil de commande de spoiler électrique (7), comprenant :
un module de détection (71) pour acquérir une position courante d'un spoiler et pour déterminer si le spoiler est ou non dévié sur la base de la position courante du spoiler et d'une position prédéfinie du spoiler, dans lequel la position prédéfinie est une position qui correspond à un mode de déplacement courant du véhicule ;
un module d'émission en sortie de signal (72) pour émettre en sortie un signal de déviation relatif à la déviation du spoiler lorsque le spoiler est déterminé comme étant dévié ;
un module d'apprentissage de spoiler (73) pour commander le spoiler pour qu'il entre dans un état d'auto-apprentissage de spoiler lorsqu'un signal de confirmation de réglage pour le signal de déviation est détecté, dans lequel l'état d'auto-apprentissage de spoiler comprend la commande du spoiler pour qu'il réalise une action d'apprentissage prédéfinie entre une pluralité de positions d'étalonnage afin d'éliminer la déviation du spoiler ; et
un module de détermination (74) pour acquérir une position réelle du spoiler en temps réel lorsque le spoiler est déplacé dans chacune des positions d'étalonnage et pour déterminer que l'auto-apprentissage de spoiler a été effectué avec succès lorsque la valeur de déviation entre la position réelle et une position d'étalonnage correspondante est détectée comme étant inférieure à la valeur de déviation prédéfinie.

9. Véhicule, comprenant un appareil de commande pour mettre en œuvre le procédé selon l'une quelconque des revendications 1 à 7.

10. Produit de programme informatique comprenant un programme informatique, dans lequel le programme informatique, lorsqu'il est exécuté par un processeur, met en œuvre le procédé selon l'une quelconque des revendications 1 à 7.
